# EUROPÄISCHE PATENTANMELDUNG

(11) **EP 2 889 184 A1**
(43) Veröffentlichungstag der Anmeldung: **01.07.2015**
(21) Anmeldenummer: 14193900.9
(22) Anmeldetag: 19.11.2014
(51) Int. Cl.: B60R 11/02, B60R 11/00

(54) **Trägervorrichtung zur Befestigung von optischen Einrichtungen in einem Kraftfahrzeug**

(30) Priorität: 12.12.2013 DE 102013225738
(71) Anmelder: ROBERT BOSCH GMBH, 70442 Stuttgart (DE)
(72) Erfinder: Geise, Stephan, 59602 Ruethen (DE)

(57) **Zusammenfassung**

Die Erfindung betrifft eine Trägervorrichtung 1 zur Befestigung optischer Einrichtungen in oder an einem Kraftfahrzeug, welche mindestens einen Grundkörper 2 und mindestens ein Befestigungselement zur Befestigung mindestens eines optischen Elements 4 umfasst. Erfindungsgemäß besteht der Grundkörper 2 zumindest teilweise aus einem Kunststoffmaterial und umfasst mindestens ein Verstärkungselement 3. Die Erfindung betrifft ferner ein Verfahren zur Herstellung einer solchen Trägervorrichtung 1.

## Beschreibung

### Hintergrund

Die Erfindung betrifft eine Trägervorrichtung zur Befestigung optischer Einrichtungen in oder an einem Kraftfahrzeug, welche mindestens einen Grundkörper und mindestens ein Befestigungselement zur Befestigung mindestens eines optischen Elements umfasst. Die Erfindung betrifft ferner ein Verfahren zur Herstellung einer solchen Trägervorrichtung.

### Stand der Technik

Insbesondere im Automobilbereich sind spezielle Anzeigevorrichtungen, die den jeweiligen Fahrzeugführer mit notwendigen Informationen versorgen, von besonderer Bedeutung. Dabei finden in zunehmendem Maße Anzeigevorrichtungen Verwendung, die außerhalb der Armaturentafel, im Blickfeld des Fahrzeugführers angeordnet sind. Mit Hilfe solcher sogenannter "Head-up-Displays" werden dem Fahrzeugführer die wichtigsten Fahrerinformationen, wie beispielsweise Geschwindigkeit, Navigationshinweise oder Gefahrensymbole, im direkten Sichtbereich angezeigt, so dass der Fahrzeugführer, ohne die Augen neu fokussieren zu müssen, gleichzeitig die Umgebung und die Fahrerinformationen erkennen kann. Das virtuelle Bild kann dabei an einer spiegelnden, lichtdurchlässigen Scheibe, auch "Combiner" genannt, vor der Windschutzscheibe erzeugt werden. Combiner können sowohl aus bruchsicherem Glas als auch aus Kunststoff hergestellt werden.

Viele optische Systeme, wie unter anderem auch das Head-Up-Display (HUD)-System, weisen ein schweres Metallgussgehäuse als Trägervorrichtung auf, in das die einzelnen optischen Komponenten eingebaut sind. Das Metallgussgehäuse ist erforderlich, damit die optischen Komponenten in festen Positionen zueinander ausgerichtet werden und das Gesamtsystem die notwendige Stabilität erhält. Auf das Metallgehäuse wird in einem zusätzlichen Montageschritt ein Kunststoffgehäuse geschraubt, in das eine transparente Abdeckfolie integriert ist. Für die beiden Gehäuse wird jeweils eine Gießanlage mit Gussform benötigt. Das aus Metall gegossene Gehäuse muss dabei für den späteren Einbau mit einzelnen Aufnahmepunkten in zusätzlichen Bearbeitungsschritten zerspant und wieder gereinigt werden. Dies sind sehr aufwendige Fertigungsschritte, die die Herstellung kosten- und zeitaufwendig machen. Darüber hinaus weist das System durch den Gussmetalleinsatz insgesamt ein entsprechend hohes Gewicht auf.

In den aktuellen Serienanwendungen werden auf die Trägervorrichtung beispielsweise Spiegel zur Fixierung einfach aufgeklebt. Diese Methode gleicht die Formänderungen der thermoplastischen Spiegel bei Temperaturänderungen aus. Der Nachteil der Klebungen ist, dass die hohen Toleranzanforderungen der Optikkomponenten zueinander bei Temperaturschwankungen nicht mehr eingehalten werden können.

Aus der DE 10 2011 075 885 A1 ist beispielsweise ein HUD-System bekannt, das ein Metallgehäuse mit einem Tragelement zur Anbringung optischer Elemente aufweist. Das Tragelement besteht aus einer Aluminiumlegierung und ist mit Befestigungselementen zur Befestigung eines Combiners versehen. Die Befestigungselemente für den Combiner bestehen aus Kunststoff und werden mittels Spritzguss- bzw. Spritzpresstechnik (sog. "Outsert-Technik") mit dem Tragelement verbunden. Nachteilig an diesem HUD-System ist daher, dass bei der Herstellung des Systems das Metallgehäuse in vielen Prozessschritten zerspant und das Befestigungselement in einem zusätzlichen Prozessschritt in einem aufwendigen Spritzgießwerkzeug angeformt werden muss. Zusätzlich muss noch eine weitere Abdeckung, z.B. aus Kunststoff, angebracht werden, um die optischen Elemente einzuschließen. Darüber hinaus weist auch dieses bekannte HUD-System durch den Metalleinsatz insgesamt ein sehr hohes Gewicht auf.

### Offenbarung der Erfindung

Es ist Aufgabe der Erfindung, eine Trägervorrichtung zur Befestigung optischer Einrichtungen in oder an einem Kraftfahrzeug bereitzustellen, die ein im Vergleich mit bekannten Vorrichtungen verringertes Gewicht aufweist und bei deren Herstellung Materialkosten und zusätzliche Bearbeitungs-/Reinigungsschritte, wie sie bei den bekannten Metallgussbauteilen erforderlich sind, eingespart werden können. Darüber hinaus sollen auf der Trägervorrichtung optische Elemente, wie zum Beispiel Spiegel oder Combiner, form- und kraftschlüssig aufgenommen und stabil zueinander ausgerichtet werden können.

Erfindungsgemäß wird die Aufgabe durch eine Trägervorrichtung der eingangs genannten Art gelöst, bei der der Grundkörper zumindest teilweise aus einem Kunststoffmaterial besteht und mindestens ein Verstärkungselement umfasst. Durch diese erfindungsgemäße Ausgestaltung mit einem Grundkörper aus Kunststoff und einem Verstärkungselement wird ein sehr leichtes und gleichzeitig stabiles optisches System zur Verfügung gestellt, das nicht mehr zerspant werden muss. Der erfindungsgemäße Optikträger muss nicht wie das sonst übliche Metallgussgehäuse in vielen Bearbeitungsschritten gegossen und zerspant werden, sondern kann fertig für die Montage vorbereitet aus einem Spritzgießwerkzeug entnommen werden. Das macht das gesamte Herstellungsverfahren zeit- sowie kostengünstiger. Durch den Einsatz von Kunststoff für die Trägervorrichtung entfallen neben den zusätzlichen Bearbeitungskosten für das Gussgehäuse auch die Kosten für das Gussmetall. Insgesamt stellt die erfindungsgemäße Trägervorrichtung ein sehr leichtes Kunststoffgehäuse mit stabilem Optikträger zur Ausrichtung und Fixierung von optischen Elementen in optischen Systemen dar. Auf dem Träger können zum Beispiel Spiegel oder Combiner form- und kraftschlüssig aufgenommen und stabil zueinander ausgerichtet werden. Durch den Einsatz von Standardkunststoff können Gewicht, Materialkosten und zusätzliche Bearbeitungs-/Reinigungsschritte im Vergleich zu den bekannten Metallgussbauteilen eingespart werden.

In vorteilhafter Ausgestaltung der Erfindung ist vorgesehen, dass das Verstärkungselement mindestens ein Befestigungselement umfasst, insbesondere mindestens einen Anschlag und/oder mindestens einen Fixierungspunkt. Durch diese Ausgestaltung können die optischen Elemente einfach in die ein- oder angeformten Befestigungselemente des stabilen Verstärkungselements eingesetzt werden, so dass sie stabil mit der Trägervorrichtung verbunden und sofort korrekt zueinander ausgerichtet sind. Hierdurch wird die Anbindung der Optikkomponenten einfacher und genauer.

In weiterer vorteilhafter Ausgestaltung der Erfindung ist vorgesehen, dass der Grundkörper mindestens ein Befestigungselement umfasst, insbesondere mindestens eine Halterung und/oder mindestens eine Aussparung, so dass die optischen Elemente nur noch in die angeformten Halterungen und/oder eingeformten Aussparungen eingesetzt werden müssen, um eine stabile Verbindung zur Trägervorrichtung herzustellen und ohne weitere Justierung eine korrekte Ausrichtung zueinander zu gewährleisten. Daher ist auch in dieser Ausführungsform die Anbindung der Optikkomponenten einfacher und genauer.

In weiterer vorteilhafter Ausgestaltung der Erfindung ist vorgesehen, dass an dem Grundkörper ein Halteelement zur Befestigung eines Schutzelements, insbesondere einer Abdeckfolie, einstückig angeformt ist. Da die Halterung für das Schutzelement direkt mit angeformt wird, kann die Trägervorrichtung einteilig ausgeführt sein, was zusätzlichen Montageaufwand vermeidet. Ein zusätzliches Befestigungselement, in das eine transparente Abdeckfolie integriert ist, ist somit in vorteilhafter Weise direkt an in das Gehäuse bzw. die Trägervorrichtung integriert.

In weiterer vorteilhafter Ausgestaltung der Erfindung ist vorgesehen, dass das Verstärkungselement zumindest teilweise in das Kunststoffmaterial des Grundkörpers eingebettet ist, insbesondere zumindest teilweise von dem Kunststoffmaterial umspritzt ist. Das Verstärkungselement, bei dem es sich um eine Art Stützgerüst handeln kann, kann insbesondere auch vollständig vom Kunststoffmaterial umgeben sein. Es ist aber auch möglich, dass Teile des Verstärkungselements, insbesondere solche, an denen die optischen Elemente befestigt werden können, frei liegen so dass sie zur unmittelbaren Befestigung optischer Elemente zugänglich sind.

In weiterer vorteilhafter Ausgestaltung der Erfindung ist vorgesehen, dass das Kunststoffmaterial des Grundkörpers einen faserverstärkten thermoplastischen Kunststoff umfasst. Insbesondere können erfindungsgemäß auch Standard-Kunststoffe verwendet werden, so dass die Kosten für die Herstellung des Optikträgers gering gehalten werden können.

In weiterer vorteilhafter Ausgestaltung der Erfindung ist vorgesehen, dass das Verstärkungselement ein Metallblech ist. Alternativ kann das Verstärkungselement auch ein faserverstärktes Kunststoffelement sein, insbesondere ein Organoblech (Faserverbundwerkstoff auf Kunststoffbasis). Hierdurch ergibt sich im Vergleich mit einem Metallblech eine zusätzliche Gewichtsreduzierung. Auch Kombinationen von Metallblechen und Organoblechen können für bestimmte Optikträger bzw. Anforderungen vorteilhaft sein.

Ein Organoblech im Sinne der Erfindung ist ein Verbund aus hochfesten Fasern und einem Kunststoff. Die Fasern bestimmen dabei maßgeblich die mechanischen Eigenschaften, zum Beispiel Festigkeit, Steifigkeit und Wärmeausdehnung, des Verbundes. Die Fasern können im Verbund auch rechtwinklig zueinander verlaufen, so dass die mechanischen Eigenschaften von Organoblechen besser als bei metallischen Werkstoffen definiert werden können. Als Fasern können beispielsweise Glas, Carbon und/oder Aramid eingesetzt werden, insbesondere in Form von Endlosfasern (Faserlänge entspricht Bauteilgröße) in Geweben oder Gelegen. Die Kunststoffkomponente überträgt die Kräfte zwischen den Fasern, stützt diese gegen Ausknicken und schützt sie vor äußeren Angriffen. Als Kunststoffe können insbesondere thermoplastische Polymere, zum Beispiel Polypropylen (PP), thermoplastisches Polyurethan (TPU), Polyamid (PA) oder Polyphenylensulfid (PPS), eingesetzt werden.

In weiterer vorteilhafter Ausgestaltung der Erfindung ist vorgesehen, dass das optische Element ein Spiegel oder ein Combiner ist. Das optische Element kann beispielswiese aus einen duroplastischen Polymer bestehen. Insbesondere kann das nachträglich angebrachte optische Element bereits voll vernetzt sein und dadurch seine Form bei Temperaturschwankungen nicht ändern, so dass selbst hohe Toleranzanforderungen durch den Einsatz von federndem Schaum, einer Dreipunktausrichtung und mit angeformten Anschlägen eingehalten werden können.

Erfindungsgemäß wird die Aufgabe ferner durch ein Verfahren zur Herstellung einer Trägervorrichtung zur Befestigung optischer Einrichtungen in oder an einem Kraftfahrzeug gelöst, das durch die folgenden Schritte gekennzeichnet ist:
a) Formen mindestens eines Verstärkungselements,
b) Einlegen des Verstärkungselements oder der Verstärkungselemente in ein Spritzgießwerkzeug,
c) Schließen des Spritzgießwerkzeugs,
d) Einspritzen mindestens eines thermoplastischen Polymers in das Spritzgießwerkzeug, wobei das Verstärkungselement oder die Verstärkungselemente zumindest teilweise in das Polymer eingebettet werden,
e) Öffnen des Werkzeugs nach einer vorgegebenen Abkühldauer und
f) Entformen der Trägervorrichtung.

Bei dem erfindungsgemäßen Verfahren wird also nicht wie sonst üblich ein Metallgussgehäuse in vielen Bearbeitungsschritten gegossen und zerspant, sondern eine im Spritzguss hergestellte, verstärkte Trägervorrichtung kann fertig für das Anbringen der optischen Elemente vorbereitet aus dem Spritzgießwerkzeug entnommen werden. Hierdurch ist das gesamte Herstellungsverfahren sehr schnell und kostengünstig.

In weiterer vorteilhafter Ausgestaltung des erfindungsgemäßen Verfahrens ist vorgesehen, dass in Schritt a) mindestens ein Befestigungselement zur Befestigung mindestens eines optischen Elements in das Verstärkungselement oder die Verstärkungselemente eingeformt wird, und/oder in Schritt d) mindestens ein Befestigungselement zur Befestigung mindestens eines optischen Elements in das Polymer eingeformt und/oder an das Polymer angeformt wird, und dass das optische Element nach Schritt f) an dem Befestigungselement befestigt wird. Die Anzahl der erforderlichen Verfahrensschritte wird durch diese Ausgestaltung zusätzlich minimiert, was das gesamte Herstellungsverfahren noch schneller und kostengünstiger macht. Darüber hinaus müssen die optischen Elemente nur noch in die während des Herstellungsprozesses direkt mit angeformten Befestigungselemente eingesetzt werden und sind dann sofort korrekt zueinander ausgerichtet. Dies macht die Anbindung der Optikkomponenten einfacher und genauer.

Die Erfindung wird im Weiteren anhand der folgenden Figuren beispielhaft näher erläutert.
**Figur 1** zeigt schematisch eine perspektivische Ansicht einer beispielhaften Ausführungsform einer erfindungsgemäßen Trägervorrichtung mit einem Verstärkungselement aus Metallblech;
**Figur 2** zeigt eine schematische Darstellung eines umgeformten und ausgestanzten Metallblechs zur Verstärkung einer erfindungsgemäßen Trägervorrichtung;
**Figur 3** zeigt schematisch einen Querschnitt durch die beispielhafte Ausführungsform der erfindungsgemäßen Trägervorrichtung gemäß Figur 1 mit einem angebrachten optischen Element;
**Figur 4** zeigt schematisch eine perspektivische Ansicht einer weiteren beispielhaften Ausführungsform einer erfindungsgemäßen Trägervorrichtung mit einem Verstärkungselement aus Organoblech;
**Figur 5** zeigt eine schematische Darstellung eines vorgeformten Organoblechs zur Verstärkung einer erfindungsgemäßen Trägervorrichtung;
**Figur 6** zeigt schematisch einen Querschnitt durch die beispielhafte Ausführungsform der erfindungsgemäßen Trägervorrichtung gemäß Figur 4 mit angebrachtem optischen Element.

### Beispiel 1:

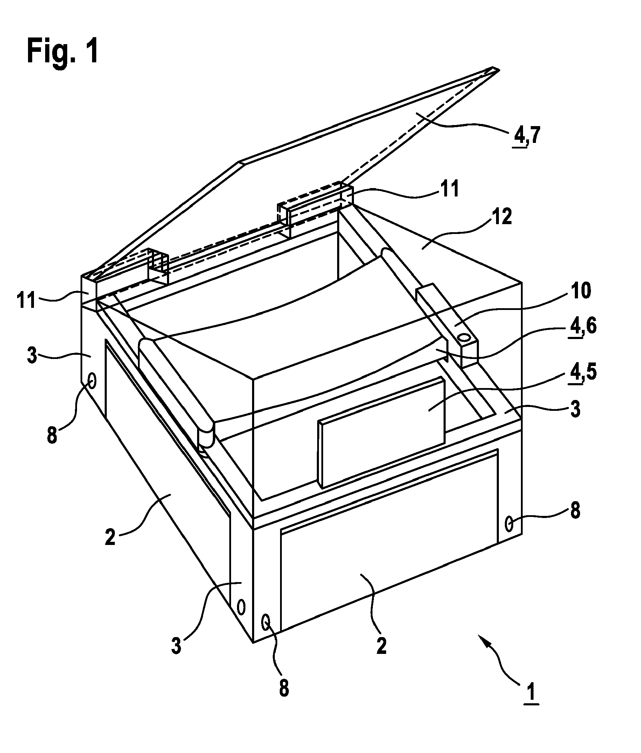

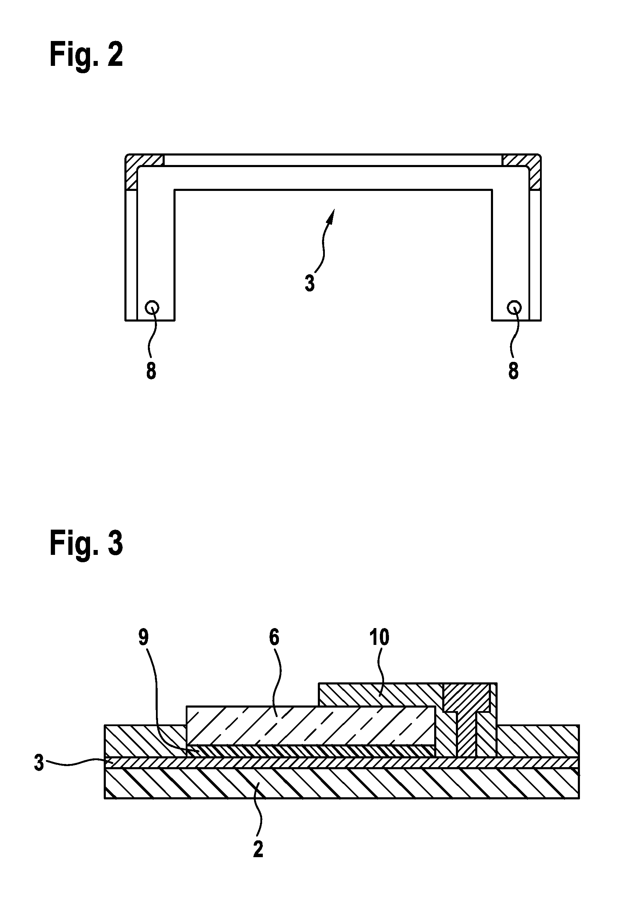

**Figur 1** zeigt eine beispielhafte Ausführungsform einer erfindungsgemäßen Trägervorrichtung 1 mit einem Grundkörper 2, der aus einem Kunststoffmaterial besteht, und Verstärkungselementen 3 aus Metallblech. An den Verstärkungselementen 3 sind optische Elemente 4 befestigt, bei denen es sich im dargestellten Ausführungsbeispiel um zwei Spiegel 5, 6 und einen Combiner 7 handelt. Zur Herstellung der erfindungsgemäßen Trägervorrichtung 1 mit metallverstärktem Optikträger wird neben einer Presse mit Stanz- und Umformvorrichtung eine Spritzgießmaschine mit Spritzgießwerkzeug und Handling benötigt. Im ersten Schritt werden die zur Verstärkung der Trägervorrichtung 1 und zur Aufnahme der optischen Elemente 4 notwendigen Verstärkungselemente 3, in dieser beispielhaften Ausführungsform Metallbleche, in einer Presse ausgestanzt und in einer Umformvorrichtung in die passende Form gebracht. Dabei werden unter anderem Fixierungspunkte in die Metallbleche eingebracht, an denen die optischen Elemente 4, wie zum Beispiel die Spiegel 5, später befestigt werden können. Ebenfalls können Befestigungsbohrungen 8 zum Einbau des Gesamtsystems in ein Kraftfahrzeug ausgestanzt werden. Die Metallbleche sollten eine bestimmte L- Form und Dicke haben, damit die nötige Stabilität erreicht wird (**Figur 2**). Im zweiten Schritt werden die Bleche mit dem Handling der Spritzgießmaschine in das Spritzgießwerkzeug eingelegt. Das Werkzeug wird geschlossen und beispielsweise faserverstärkter Thermoplast, zum Beispiel Polypropylen mit Glasfasern und/oder Mineralfüllstoff, um die Metallbleche eingespritzt. Nach einer vorgegebenen Kühlzeit wird das Spritzgießwerkzeug geöffnet und die Trägervorrichtung 1 kann entnommen werden. Nach einer kurzen Lagerungszeit können die optischen Elemente 4 an der Trägervorrichtung 1 befestigt und ausgerichtet werden. Zum Beispiel kann ein Spiegel 6 aus faserverstärktem Duroplast eingesetzt werden. Wie aus **Figur 3** ersichtlich, wird der Spiegel 6 mit einem Polyurethanschaum 9 eingeklebt, der das Bauteil wie eine Feder gegen am Verstärkungselement 3 angeschraubte Anschläge 10 drückt und zusammen mit der formschlüssigen Dreipunktaussparung im Kunststoff des Grundkörpers 2 den Spiegel 6 ausrichtet und fixiert. Im vorderen Teil der Trägervorrichtung 1 sind eine Aussparung im Kunststoff des Grundkörpers 2 und Fixierungspunkte im Verstärkungselement 3 vorgesehen, die als Befestigungselemente einen weiteren Spiegel 5 oder beispielsweise eine Projektionsfläche aufnehmen können. Im hinteren Bereich der Trägervorrichtung 1 sind Aussparungen im Grundkörper 2 mit Fixierungspunkten im Verstärkungselement 3 als Befestigungselemente für die Gelenkstücke 11 des Combiners 7 vorgesehen. In das fertig montierte Gehäuse wird zum Abschluss eine Abdeckfolie 12 eingelegt und die Gelenkstücke 11 des Combiners 7 angeschraubt oder angeclipst. Anschließend kann das Gesamtsystem in das Kraftfahrzeug eingebaut werden.

Erfindungsgemäß besteht also nur das innere Skelett mit den hoch genauen Verstärkungselementen, z.B. auch für den Combiner oder für die Anschraubpunkte im Fahrzeug, aus Metall. Der umgeformte Metallträger wird ins Spritzgießwerkzeug eingelegt und mit z.B. verstärktem Polypropylen (PP) umspritzt. Dabei werden die Befestigungselement und/oder ggf. zusätzlichen Halterungen, z.B. für eine transparente Abdeckscheibe, und das restliche Gehäuse zum Einschließen der optischen Elemente komplett in einem Spritzgießzyklus ausgeformt.

### Beispiel 2:

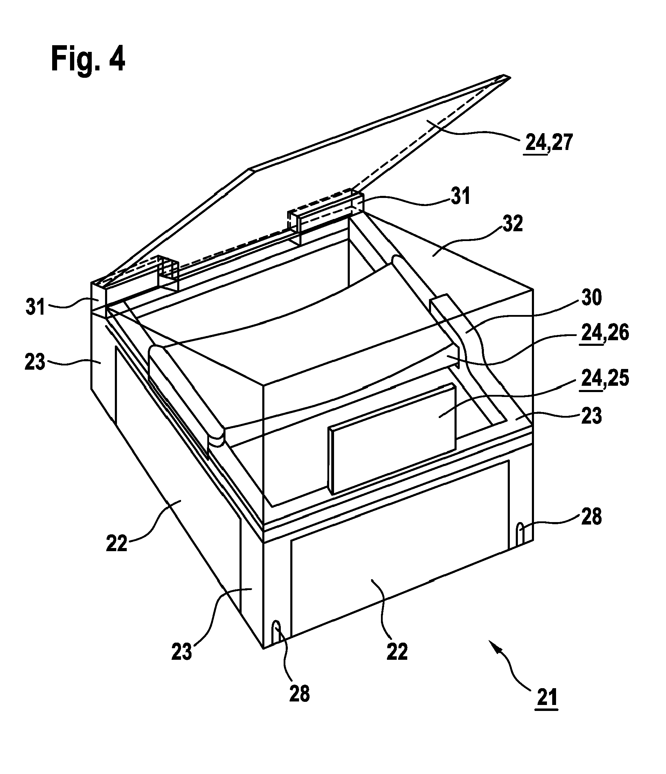

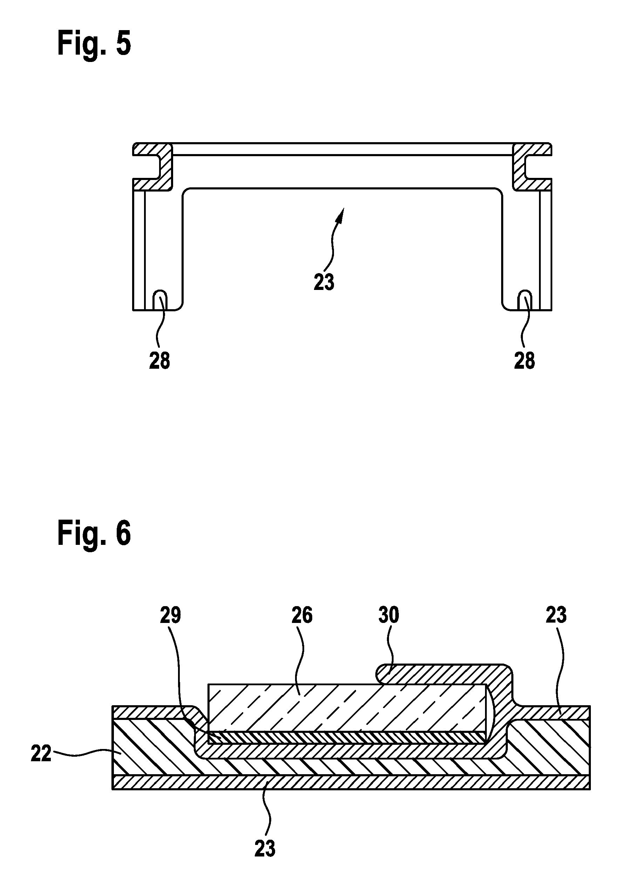

**Figur 4** zeigt eine weitere beispielhafte Ausführungsform einer erfindungsgemäßen Trägervorrichtung 21 mit einem Grundkörper 22, der aus einem Kunststoffmaterial besteht, und Verstärkungselementen 23 aus Organoblech. An den Verstärkungselementen 23 sind optische Elemente 24 befestigt, bei denen es sich im dargestellten Ausführungsbeispiel um zwei Spiegel 25, 26 und einen Combiner 27 handelt. Zur Herstellung der erfindungsgemäßen Trägervorrichtung 21 mit einem Optikträger aus Organoblechen wird neben einer Presse mit Gewebebahnzuführung und einem Presswerkzeug eine Spritzgießmaschine mit Spritzgießwerkzeug und Handling benötigt. Im ersten Schritt werden die zur Verstärkung des Grundkörpers 22 und zur Aufnahme der optischen Elemente 24 notwendigen Organobleche in der Presse durch Eingießen von zum Beispiel Polyamid oder Epoxydharz um die Gewebebahn in die passende Form gebracht. Dabei werden Fixierungspunkte mit ausgeformt, an denen zum Beispiel die optischen Elemente 24 später befestigt werden können. Ebenfalls können Befestigungsbohrungen 28 zum Einbau des Gesamtsystems in ein Kraftfahrzeug ausgeformt werden. Die Organobleche müssen eine bestimmte U-Form und Dicke haben, damit die nötige Stabilität erreicht wird (Figur 5). Im zweiten Schritt wird das Organoblech-Grundgestell mit dem Handling der Spritzgießmaschine in das Spritzgießwerkzeug eingelegt. Das Werkzeug wird geschlossen und faserverstärkter Thermoplast (zum Beispiel Polypropylen mit Glasfasern und/oder Mineralfüllstoff) um die Organobleche eingespritzt. Nach einer vorgegebenen Kühlzeit wird das Spritzgießwerkzeug geöffnet und die Trägervorrichtung 21 kann entnommen werden. Nach einer kurzen Lagerungszeit können die optischen Elemente 24 an der Trägervorrichtung 21 befestigt und ausgerichtet werden. Zum Beispiel kann ein Spiegel 26 aus faserverstärktem Duroplast eingesetzt werden. Wie aus **Figur 6** ersichtlich, wird der Spiegel 26 mit einem Polyurethanschaum 29 eingeklebt, der das Bauteil wie eine Feder gegen die in den Verstärkungselementen 23 mit ausgeformten Anschläge 30 drückt und zusammen mit der formschlüssigen Dreipunktaussparung im Kunststoff des Grundkörpers 22 den Spiegel 6 ausrichtet und fixiert. Im vorderen Teil der Trägervorrichtung 21 sind eine Aussparung im Kunststoff des Grundkörpers 22 und Fixierungspunkte im den Verstärkungselementen 23 vorgesehen, die als Befestigungselemente den weiteren Spiegel 25 oder eine Projektionsfläche aufnehmen können. Im hinteren Bereich der Trägervorrichtung 21 sind Aussparungen im Kunststoff des Grundkörpers 22 mit Fixierungspunkten in den Verstärkungselementen 23 als Befestigungselemente für die Gelenkstücke 31 des Combiners 27 vorgesehen. In das fertig montierte Gehäuse wird zum Abschluss eine Abdeckfolie 32 eingelegt und die Gelenkstücke 31 des Combiners 27 angeschraubt oder angeclipst. Anschließend kann das Gesamtsystem in das Kraftfahrzeug eingebaut werden.

Durch die Verwendung von Organoblechen als Verstärkungselement kann im Vergleich mit der mittels Metallblechen verstärkten Trägervorrichtung gemäß Beispiel 1 eine zusätzliche Reduzierung des Gesamtgewichts erzielt werden. Darüber hinaus können bei der Ausführungsform gemäß Beispiel 2 die für die Bearbeitung der Metallbleche erforderlichen Verfahrensschritte eingespart werden.

## Patentansprüche

1. Trägervorrichtung (1, 21) zur Befestigung optischer Einrichtungen in oder an einem Kraftfahrzeug, welche mindestens einen Grundkörper und mindestens ein Befestigungselement zur Befestigung mindestens eines optischen Elements umfasst,
**dadurch gekennzeichnet, dass**
der Grundkörper (2, 22) zumindest teilweise aus einem Kunststoffmaterial besteht und mindestens ein Verstärkungselement (3, 23) umfasst.

2. Trägervorrichtung nach Anspruch 1,
**dadurch gekennzeichnet, dass**
das Verstärkungselement (3, 23) mindestens ein Befestigungselement umfasst, insbesondere mindestens einen Anschlag (10, 30) und/oder mindestens einen Fixierungspunkt.

3. Trägervorrichtung nach Anspruch 1 oder 2,
**dadurch gekennzeichnet, dass**
der Grundkörper (2, 22) mindestens ein Befestigungselement umfasst, insbesondere mindestens eine Halterung und/oder mindestens eine Aussparung.

4. Trägervorrichtung nach einem der Ansprüche 1 bis 3,
**dadurch gekennzeichnet, dass**
an dem Grundkörper (2, 22) ein Halteelement zur Befestigung eines Schutzelements, insbesondere einer Abdeckfolie (12, 32), einstückig angeformt ist.

5. Trägervorrichtung nach einem der Ansprüche 1 bis 4,
**dadurch gekennzeichnet, dass**
das Verstärkungselement (3, 23) zumindest teilweise in das Kunststoffmaterial des Grundkörpers (2, 22) eingebettet ist, insbesondere zumindest teilweise von dem Kunststoffmaterial umspritzt ist.

6. Trägervorrichtung nach einem der Ansprüche 1 bis 5,
**dadurch gekennzeichnet, dass**
das Kunststoffmaterial des Grundkörpers (2, 22) einen faserverstärkten thermoplastischen Kunststoff umfasst.

7. Trägervorrichtung nach einem der Ansprüche 1 bis 6,
**dadurch gekennzeichnet, dass**
das Verstärkungselement (3, 23) ein und/oder ein faserverstärktes Kunststoffelement ist, insbesondere ein Organoblech.

8. Trägervorrichtung nach einem der Ansprüche 1 bis 7,
**dadurch gekennzeichnet, dass**
das optische Element (4, 24) ein Spiegel (5, 6, 25, 26) oder ein Combiner (7, 27) ist.

9. Verfahren zur Herstellung einer Trägervorrichtung (1, 21) zur Befestigung optischer Einrichtungen in oder an einem Kraftfahrzeug,
**gekennzeichnet durch,**
a) Formen mindestens eines Verstärkungselements (3, 23),
b) Einlegen des Verstärkungselements (3, 23) oder der Verstärkungselemente (3, 23) in ein Spritzgießwerkzeug,
c) Schließen des Spritzgießwerkzeugs,
d) Einspritzen mindestens eines thermoplastischen Polymers in das Spritzgießwerkzeug, wobei das Verstärkungselement (3, 23) oder die Verstärkungselemente (3, 23) zumindest teilweise in das Polymer eingebettet werden,
e) Öffnen des Werkzeugs nach einer vorgegebenen Abkühldauer und
f) Entformen der Trägervorrichtung (1, 21).

10. Verfahren nach Anspruch 9,
**dadurch gekennzeichnet, dass**
in Schritt a) mindestens ein Befestigungselement zur Befestigung mindestens eines optischen Elements (4, 24) in das Verstärkungselement (3, 23) oder die Verstärkungselemente (3, 23) eingeformt wird, und/oder
in Schritt d) mindestens ein Befestigungselement zur Befestigung mindestens eines optischen Elements (4, 24) in das Polymer eingeformt und/oder an das Polymer angeformt wird, und dass
das optische Element (4, 24) nach Schritt f) an dem Befestigungselement befestigt wird.
